# EUROPEAN PATENT APPLICATION

(11) **EP 2 180 030 A2**
(43) Date of publication of application: **28.04.2010**
(21) Application number: 09012884.4
(22) Date of filing: 12.10.2009
(51) Int. Cl.: C09K 11/06, H05B 33/14

(54) **Organic light emitting diode with nano-dots and fabrication method thereof**

(30) Priority: 23.10.2008 CN 200897140747
(71) Applicant: National Tsing Hua University, Hsinchu 30013 (TW)
(72) Inventor: Jou, Jwo-Huei, Hsin-Chu TW 30013 (CN); Wang, Wei-Ben, Hsin-Chu Taiwan 30013 (CN); Hsu, Mao-Feng, Hsin-Chu TW 30013 (CN); Chen, Cheng-Chung, Hsin-Chu TW 30013 (CN)
(74) Representative: Böck, Bernhard

(57) **Abstract**

An organic light emitting diode (OLED) with nano-dots and a fabrication method thereof are disclosed. The OLED apparatus comprises a substrate (76, 88, 94), a first electrically conductive layer (77, 89, 95), a first emission-auxiliary layer (78, 90, 96), an emissive layer (79, 91, 97), a second emission-auxiliary layer (80, 92, 98) and a second electrically conductive layer (81, 93, 99). Its fabrication method is described below. Nano-dots with functional groups on the surface are incorporated into the emissive layer (79, 91, 97), the first emission-auxiliary layer (78, 90, 96) or the second emission-auxiliary layer (80, 92, 98) to form a layered electro-luminescent structure. By using the fabrication method, the resultant efficiency of the OLEDs can be markedly enhanced.

## Description

### BACKGROUND OF THE INVENTION

### (a) Field of the Invention

The present invention discloses an organic light emitting diode with nano-dots and a fabrication method thereof. Nano-dots with functional groups on the surface are incorporated into an emissive layer, a first emission-auxiliary layer or a second emission-auxiliary layer to form a layered electro-luminescent structure. By using the fabrication method, the efficiency of the OLEDs can be markedly enhanced.

### (b) Description of the Prior Art:

An organic electro-luminescence display is referred to as an organic light emitting diode (OLED). C. W. Tang and S. A. VanSlyk et al. of Eastman Kodak Company used a vacuum evaporation method to make it in 1987. The hole transporting material and the electron counterpart were respectively deposited on transparent indium tin oxide (abbreviated as ITO) glass, and then a metal electrode was vapor-deposited thereon to form the self-luminescent OLED apparatus. Due to high brightness, fast response speed, light weight, compactness, true color, no difference in viewing angles, no need of liquid crystal display (LCD) type backlight plates as well as a saving in light sources and low power consumption, it has become a new generation display.

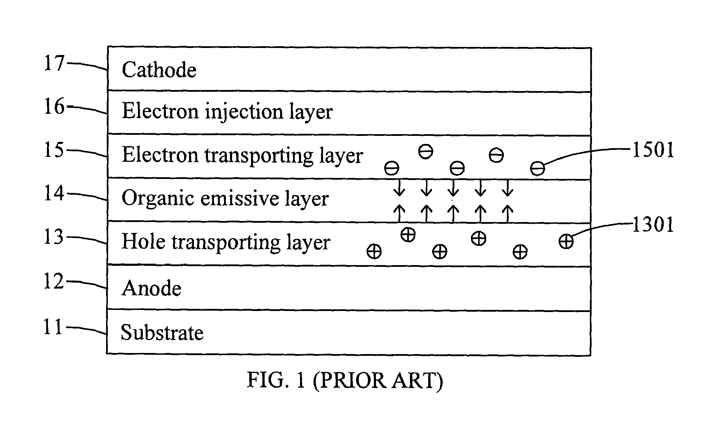

Referring to FIG. 1, there is a cross-sectional view showing a structure of an OLED apparatus of the prior art. The structure was proposed by Steven A. Vanslyke et al. of Eastman Kodak Company in U.S. Pat. No. 5061569 (1991). In the invention, the OLED apparatus structure sequentially comprises, from bottom to top, a transparent substrate 11, a transparent anode (indium tin oxide, ITO) 12, a hole transporting layer (HTL) 13, an organic emissive layer (EL) 14, an electron transporting layer (ETL) 15, an electron injection layer (EIL) 16, and a metal cathode 17. When a forward bias is applied, holes 1301 are injected from the anode 12 and electrons 1501 are injected from the cathode 17. Due to the potential difference resulted from the external electrical field, the electrons 1501 and holes 1301 move in the thin film and hence recombine in the organic emissive layer 14. A part of the energy released by the recombination of the electron and hole pairs excites the emissive molecules from a ground-state to an excited-state in the organic emissive layer 14. As the emissive molecules fall back form the excited-state to the ground state, a certain portion of the energy is released to emit light.

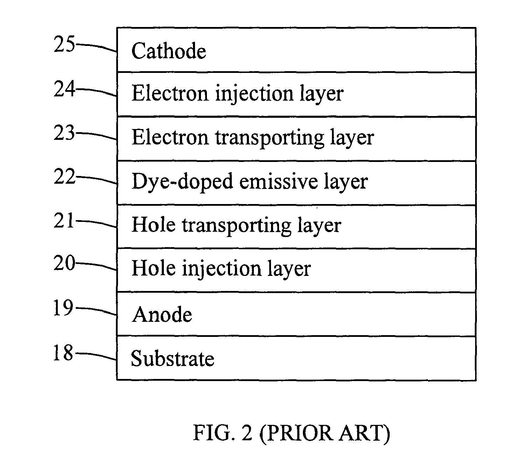

FIG. 2 illustrates a doped type OLED apparatus proposed by C. H. Chen et al. in Applied Physics Letters, vol. 85, p. 3301 (2004). The OLED apparatus structure sequentially comprises, from bottom to top, a transparent substrate 18, a transparent anode 19, a hole injection layer 20, a hole transporting layer 21, a dye-doped emissive layer 22, an electron transporting layer 23, an electron injection layer 24, and a metal cathode 25 to emit light.

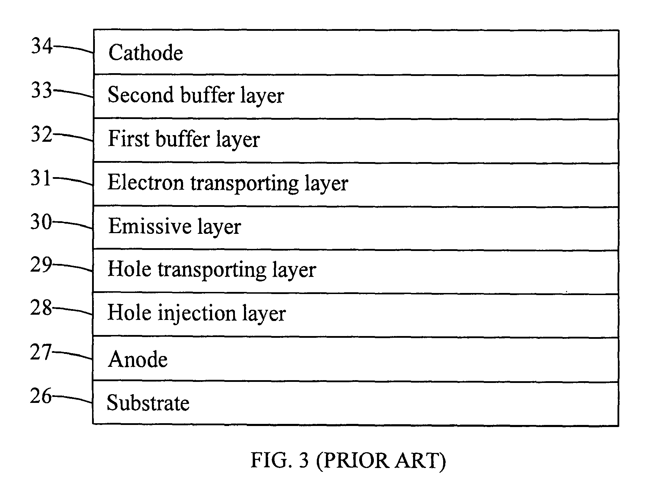

FIG. 3 is also a cross-sectional view showing a structure of an OLED apparatus of the prior art, which was proposed by Raychaudhuri et al. of Eastman Kodak Company in TW Pat. No. 497283 (2002). In the invention, the OLED apparatus structure sequentially comprises, from bottom to top, a transparent substrate 26, a transparent anode 27, a hole injection layer 28, a hole transporting layer 29, an emissive layer 30, an electron transporting layer 31, a first buffer layer 32, a second buffer layer 33, and a metal cathode 34. The first buffer layer is of alkali halide, and the second buffer layer is of phthalocyanine. When a forward bias is applied, holes and electrons can recombine and in turn emit light in the emissive layer 30.

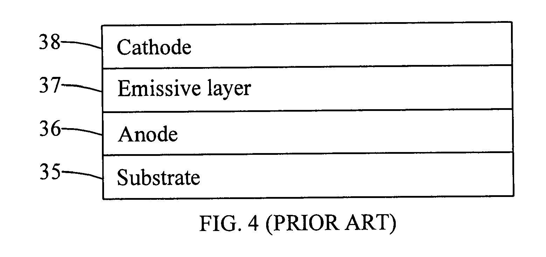

Referring to FIG. 4, there is a cross-sectional view showing a structure of another OLED apparatus of the prior art. The structure was proposed by Hieronymus Andriessen et al. of AGFA Gevaert in U.S. Pat. No. 6602731 (2003). In the invention, the OLED apparatus structure sequentially comprises, from bottom to top, a transparent substrate 35, a transparent anode 36, an emissive layer 37, and a metal cathode 38. The emissive layer is composed of inorganic quantum dots CuS and ZnS. When a forward bias is applied, holes and electrons can recombine and hence emit light in the emissive layer 37.

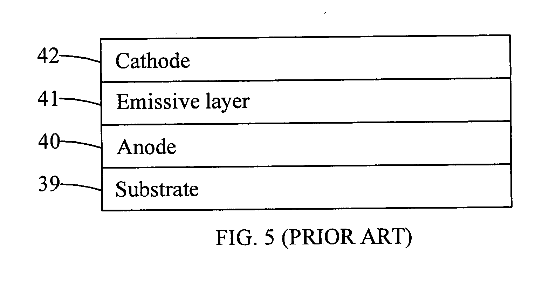

Also, referring to FIG. 5, there is a cross-sectional view showing a structure of another OLED apparatus of the prior art. The structure was proposed by Dietrich Bertram et al. in U.S. Pat. App. No. 2006/0170331 A1 (2006). In the invention, the OLED apparatus structure sequentially comprises, from bottom to top, a transparent substrate 39, a transparent anode 40, an emissive layer 41, and a metal cathode 42. The emissive layer is composed of inorganic composite quantum dots, CdSe/CdS. CdS forms the core of the quantum dot, and CdSe forms the outer shell. When a forward bias is applied, holes and electrons can recombine and hence emit light in the emissive layer 41.

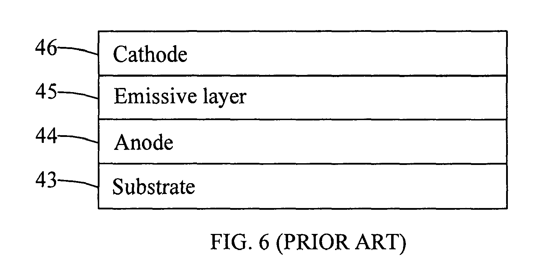

Referring to FIG. 6, there is also a cross-sectional view showing a structure of an OLED apparatus of the prior art. The structure was proposed by Anil Raj Duggal et al. of General Electric Company in U.S. Pat. No. 6777724 (2004). In the invention, the OLED apparatus structure sequentially comprises, from bottom to top, a transparent substrate 43, a transparent anode 44, an emissive layer 45, and a metal cathode 46. The emissive layer comprises organic/inorganic composite quantum dots incorporated uniformly in an organic material. Each organic/inorganic composite quantum dot comprises: (Y_{1-x-y}GdₓCe_{y})Al₅O₁₂, (Y₁₋ₓGeₓ)₃(Al_{1-y}Ga_{y})O₁₂, (Y_{1-x-y}GdₓCe_{y})₃(Al_{5-z}Ga_{z})O₁₂ or (Gd₁₋ₓCeₓ)Sc₂Al₃O₁₂ where 0≤x≤1, 0≤y≤1, 0≤z≤5 and x+y≤1. When a forward bias is applied, holes and electrons can recombine and hence emit light in the emissive layer 45.

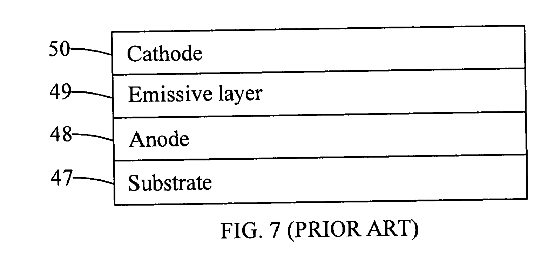

Also, referring to FIG. 7, there is a cross-sectional view showing a structure of an OLED apparatus of the prior art. The structure was proposed by Rafat Ata Mustafa hikmet et al. of Koninklijke Philips Electronics in U.S. Pat. App. No. 2007/0077594 A1 (2004). In the invention, the OLED apparatus structure sequentially comprises, from bottom to top, a transparent substrate 47, a transparent anode 48, an emissive layer 49, and a metal cathode 50. The emissive layer comprises inorganic composite quantum dots incorporated uniformly in a polymer. Each inorganic composite quantum dot is composed of a II-VI group semiconductor material covering a III-V counterpart. When a forward bias is applied, holes and electrons can recombine and hence emit light in the emissive layer 49.

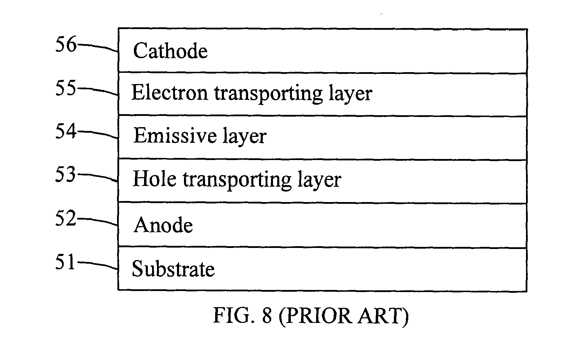

Referring to FIG. 8, there is a cross-sectional view showing a structure of another OLED apparatus. The structure was proposed by Mihri Ozkan et al. of the Regents of the University of California in U.S. Pat. No. 7132787 (2006). In the invention, the OLED apparatus structure sequentially comprises, from bottom to top, a transparent substrate 51, a transparent anode 52, a hole transporting layer 53, an emissive layer 54, an electron transporting layer 55, and a metal cathode 56. The emissive layer is composed of inorganic quantum dots CdSe to emit light. When a forward bias is applied, holes and electrons can recombine and hence emit light in the emissive layer 54.

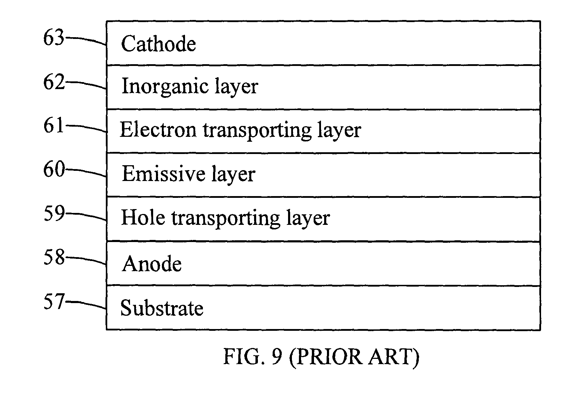

Referring to FIG. 9, it is shown an OLED apparatus of the prior art. The structure was proposed by T. H. Liu et al. in TW Pat. No. 200618664 (2006). The OLED apparatus structure sequentially comprises, from bottom to top, a transparent substrate 57, a transparent anode 58, a hole transporting layer 59, an emissive layer 60, an electron transporting layer 61, an inorganic layer 62, and a metal cathode 63 to emit light.

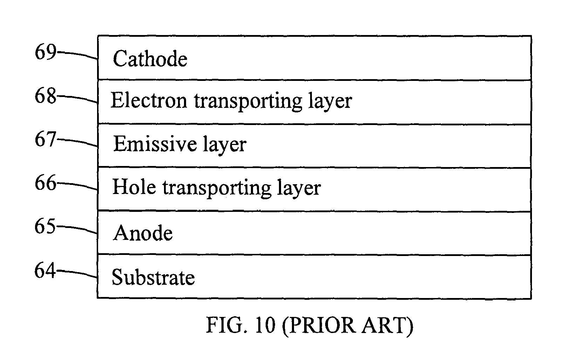

Referring to FIG. 10, there is a cross-sectional view showing a structure of another OLED apparatus of the prior art. The structure was proposed by J. H. Jou of Tsing Hua University in TW Pat. No. 200608614 (2006). In the invention, the OLED apparatus structure sequentially comprises, from bottom to top, a transparent substrate 64, a transparent anode 65, a hole transporting layer 66, and an emissive layer 67 wherein the emissive layer comprises a plurality of organic/inorganic composite quantum dots incorporated in a polymer and each organic/inorganic composite quantum dot comprises: a ZnX quantum dot (X is selected from the group consisting of S, Se, Te and the combination thereof) and an organic molecule covering the surface of the quantum dot, an electron transporting layer 68, and a metal cathode 69. When a forward bias is applied, holes are injected from the anode 65 and electrons are injected from the cathode 69. Due to the potential difference resulted from the external electrical field, electrons and holes inject in the thin film and further recombine in the emissive layer 67. The quantum dots in the emissive layer can increase the carrier-recombination efficiency to emit light.

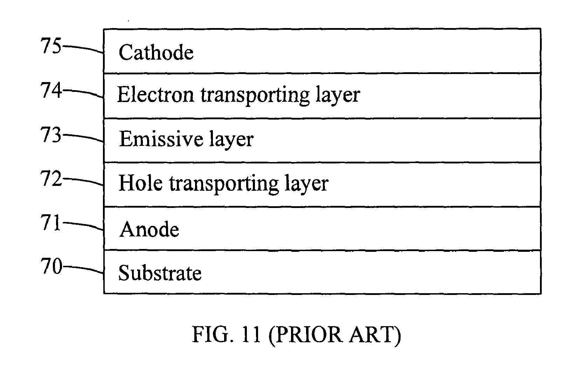

Referring to FIG. 11, there is a cross-sectional view showing a structure of another OLED apparatus of the prior art. The structure was proposed by J. H. Jou of Tsing Hua University in TW Pat. App. No. 096120455 (2007). In the invention, the OLED apparatus structure sequentially comprises, from bottom to top, a transparent substrate 70, a transparent anode 71, a hole transporting layer 72, an emissive layer 73, an electron transporting layer 74, and a metal cathode 75. The hole transporting layer comprises poly(ethylenedioxythiophene): poly(styrene sulfonic acid) (PEDOT: PSS) doped with nano dots. The nano dot is synthesized by a sol-gel method and its chemical formula is MₓO_{y} where M is metal (titanium (Ti), zinc (Zn), silver (Ag), copper (Cu), nickel (Ni), tin (Sn), iron (Fe)) and inorganic metalloid (silicon (Si)), and O is an oxygen atom. By using the above fabrication method, the resultant efficiency of the OLED can be markedly enhanced.

As a result of a variety of extensive and intensive studies and discussions, the inventors herein propose an enhanced high efficiency organic light emitting diode with nano-dots synthesized by a sol-gel method and a fabrication method thereof based on their research for many years and plenty of practical experience, thereby accomplishing the foregoing expectations.

### SUMMARY OF THE INVENTION

In view of the above problems, the present invention discloses an organic light emitting diode with nano-dots and a fabrication method thereof. The OLED apparatus comprises a substrate, a first electrically conductive layer, a first emission-auxiliary layer, an emissive layer, a second emission-auxiliary layer and a second electrically conductive layer. Its fabrication method is described below. Nano-dots with functional groups on the surface are incorporated into the emissive layer, the first emission-auxiliary layer or the second emission-auxiliary layer to form a layered electro-luminescent structure. By using the fabrication method, the resultant efficiency of the OLEDs can be markedly enhanced.

In order that the technical features and effects of the present invention may be further understood and appreciated, the preferred embodiments are described below in detail with reference to the related drawings.

### BRIEF DESCRIPTION OF THE DRAWINGS

The objects, features and advantages of the invention will become more apparent from the following detailed description of the exemplary preferred embodiments of an organic light emitting diode with nano-dots and a fabrication method thereof according to the present invention with reference to the related drawings.
FIG. 1 is a cross-sectional view showing a structure of an OLED apparatus according to the prior art.
FIG. 2 is a cross-sectional view showing a structure of another OLED apparatus according to the prior art.
FIG. 3 is a cross-sectional view showing a structure of an OLED apparatus of the prior art.
FIG. 4 is a cross-sectional view showing a structure of another OLED apparatus of the prior art.
FIG. 5 is a cross-sectional view showing a structure of another OLED apparatus of the prior art.
FIG. 6 is a cross-sectional view showing a structure of an OLED apparatus of the prior art.
FIG. 7 is a cross-sectional view showing a structure of an OLED apparatus of the prior art.
FIG. 8 is a cross-sectional view showing a structure of another OLED apparatus of the prior art.
FIG. 9 is a cross-sectional view showing a structure of an OLED apparatus of the prior art.
FIG. 10 is a cross-sectional view showing a structure of another OLED apparatus of the prior art.
FIG. 11 is a cross-sectional view showing a structure of another OLED apparatus of the prior art.
FIG. 12 is a cross-sectional view showing a structure and a schematic view showing the energy levels of an OLED apparatus according to the present invention.
FIG. 13 is a flow chart of a fabrication method of an OLED apparatus according to the present invention.
FIG. 14 is a cross-sectional view showing a structure and a schematic view showing the energy levels of an OLED apparatus according to a preferred embodiment of the present invention.
FIG. 15 is a schematic view showing the energy levels of an OLED apparatus according to a preferred embodiment of the present invention.
FIG. 16 is a cross-sectional view showing a structure and a schematic view showing the energy levels of another OLED apparatus according to a preferred embodiment of the present invention.
FIG. 17 is an energy level diagram of another OLED apparatus according to a preferred embodiment of the present invention.
FIG. 18 is a cross-sectional view showing a structure and a schematic view showing the energy levels of an OLED apparatus according to an embodiment of the prior art.
FIG. 19 is an energy level diagram of an OLED apparatus according to an embodiment of the prior art.

### DETAILED DESCRIPTION OF THE PREFERRED EMBODIMENTS

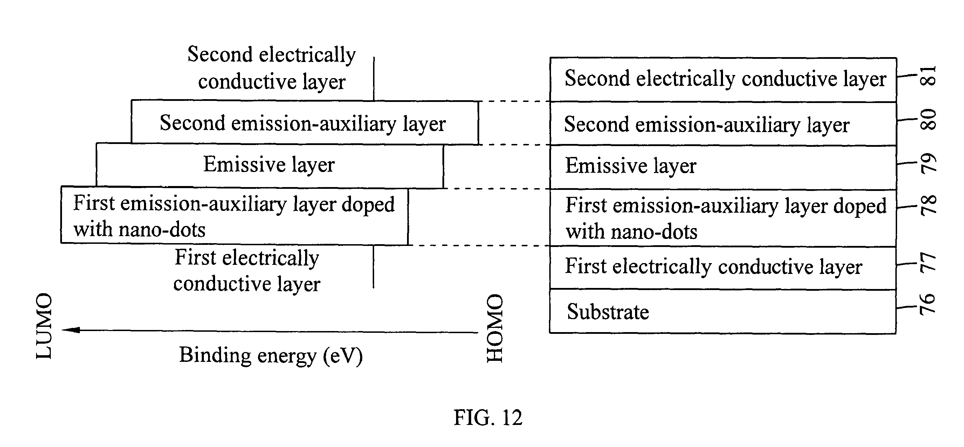

Referring to FIG. 12, there is a cross-sectional view showing a structure of an OLED according to a preferred embodiment of the present invention. The OLED structure sequentially comprises, from bottom to top, a substrate 76, a first electrically conductive layer 77, a first emission-auxiliary layer 78 doped with nano-dots, a dye-doped light emissive layer 79, a second emission-auxiliary layer 80 and a second electrically conductive layer 81. The first electrically conductive layer 77 is deposited on the substrate 76. The first emission-auxiliary layer 78 doped with nano-dots is deposited on the first electrically conductive layer 77. The emissive layer 79 is deposited on the first emission-auxiliary layer 78 doped with nano-dots. The second emission-auxiliary 80 is deposited on the emissive layer 79, and the second electrically conductive layer 81 is deposited on the second emission-auxiliary layer 80.

As described above, the dye-doped emissive layer 79 comprises a host material and more than one guest material which can be a fluorescent or phosphorescent emitter. Moreover, the first emission-auxiliary layer 78 doped with nano-dots is a composite of a hole transporting material, poly(ethylenedioxythiophene): poly(styrene sulfonic acid) (PEDOT: PSS), and nano-dots with functional groups on its surface (polymeric nano-dots). The chemical formula of the nano-dots is MₓO_{y}R_{z} where M is a metal, transition metal, metalloid or metal alloy, O is an oxygen atom and R is an organic group. The metal is selected from the group consisting of aluminum (Al), tin (Sn), magnesium (Mg) and calcium (Ca). The transition metal is selected from the group consisting of titanium (Ti), manganese (Mn), zinc (Zn), gold (Au), silver (Ag), copper (Cu), nickel (Ni) and iron (Fe). The metalloid is silicon (Si). The organic group is selected from the group consisting of amino, alkyl, alkenyl and hydroxyl. In addition, the surface charges of the nano-dots measured by means of an electrophoresis light scattering method are from +1 to +200 mV or from -1 to -200 mV. The doping weight percentage of the nano-dots is from 0.1 to 15 wt%, and their particle diameters are in the range of 1 to 30 nm. The second emission-auxiliary layer 80 comprises an electron transporting material and an electron injection material. The electron transporting material can be 1,3, 5-tris(N-phenyl-benzimidazol-2-yl)benzene (TPBi), tris(8-hydroxyquinoline) aluminum (Alq₃), or the like, and the electron injection material can be lithium fluoride (LiF), cesium fluoride (CsF), or the like. The second electrically conductive layer 81 can generally be made of electrically conductive materials like aluminum (Al), silver (Ag), etc. The substrate 76 can generally be a glass substrate, a plastic substrate or a metal substrate. The first electrically conductive layer 77 can generally be an indium tin oxide (ITO) layer or an indium zinc oxide (IZO) layer. In addition, the first emission-auxiliary layer can be a carrier injection layer, a carrier transporting layer, a carrier blocking layer or an exciton-confining layer. The second emission-auxiliary layer can be a carrier injection layer, a carrier transporting layer, a carrier blocking layer or an exciton-confining layer.

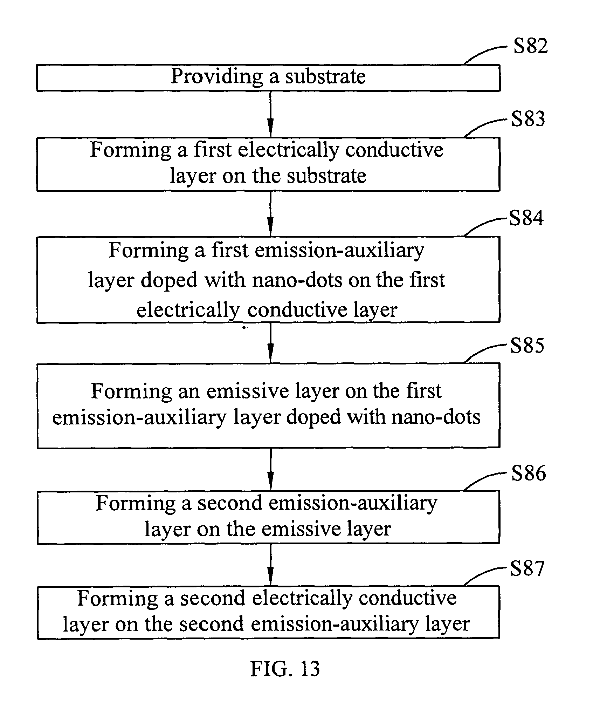

Referring to FIG. 13, there is a flow chart of a fabrication method of an OLED according to a preferred embodiment of the present invention. The method comprises the following steps:
Step S82: providing a substrate;
Step S83: forming a first electrically conductive layer on the substrate;
Step S84: forming a first emission-auxiliary layer doped with nano-dots on the first electrically conductive layer;
Step S85: forming a dye-doped emissive layer on the first emission-auxiliary layer doped with the nano-dots;
Step S86: forming a second emission-auxiliary layer on the emissive layer;
Step S87: forming a second electrically conductive layer on the second emission-auxiliary layer;

The composition of the emissive layer comprises a host material and more than one guest material, comprising a fluorescent emissive material or phosphorescent emissive material. The first emission-auxiliary layer doped with the nano-dots is a composite of a hole transporting material, poly(ethylenedioxythiophene): poly(styrene sulfonic acid) (PEDOT: PSS), and nano-dots with functional groups on its surface (polymeric nano-dots). The chemical formula of the nano-dots is MₓO_{y}R_{z} where M is a metal, transition metal, metalloid or metal alloy, O is an oxygen atom and R is an organic group. The metal is selected from the group consisting of aluminum (Al), tin (Sn), magnesium (Mg) and calcium (Ca). The transition metal is selected from the group consisting of titanium (Ti), manganese (Mn), zinc (Zn), gold (Au), silver (Ag), copper (Cu), nickel (Ni) and iron (Fe). The metalloid is silicon (Si). The organic group is selected from the group consisting of amino, alkyl, alkenyl and hydroxyl. In addition, the surface charges of the nano-dots measured by means of an electrophoresis light scattering method are from +1 to +200 mV or from -1 to -200 mV. The doping concentration of the nano-dots is from 0.1 to 15 wt%, and their particle diameters are in the range of 1 to 30 nm. The second emission-auxiliary layer comprises an electron transporting material and an electron injection material. The electron transporting material can be TPBi and Alq₃, etc., and the electron injection material can be LiF, CsF, or the like. The second electrically conductive layer can generally be made of electrically conductive materials like Al, Ca and Ag, etc. The substrate can generally be a glass substrate, a plastic substrate or a metal substrate. Moreover, the first emission-auxiliary layer can be a carrier injection layer, a carrier transporting layer, a carrier blocking layer or an exciton-confining layer. The second emission-auxiliary layer can be a carrier injection layer, a carrier transporting layer, a carrier blocking layer or an exciton-confining layer.

Referring to Table 1, it is a comparative table showing the power efficiency of exemplary examples according to the present invention and the comparative example as follows.

### Example 1

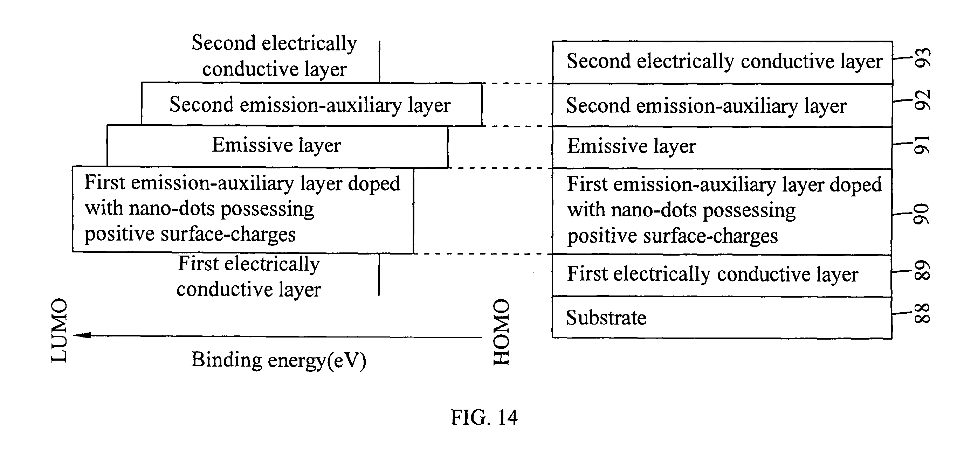

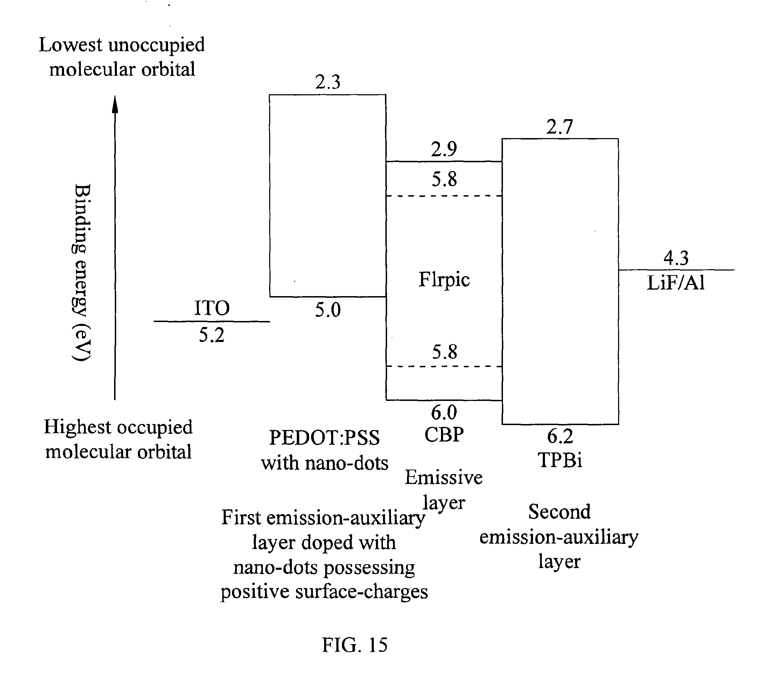

Example 1 is an OLED apparatus made according to the present invention. With reference to the apparatus structure shown in FIG. 14 and the energy level diagram shown in FIG. 15, its fabrication method is described below. The device was fabricated by a solution process using an ITO coated glass substrate. The substrate 88 is cleaned in ultrasonic baths of detergent, de-ionized water, acetone and isopropyl alcohol in turn, and then treated with the boiling hydrogen peroxide. The resulted substrate is purged with nitrogen and then placed into a nitrogen glove box for the solution process.

The first step is to spin coat a 35 nm first emission-auxiliary layer 90 on the pre-cleaned first electrically conductive layer 89 under nitrogen. The first emission-auxiliary layer 90 is composed of PEDOT: PSS doped with nano-dots which possesses positive surface-charge. The second step is to deposit a 35 nm blue emissive layer 91 via wet-process. A 32 nm electron transporting layer of TPBi is then deposited at 2×10⁻⁵ torr. Finally, a 0.7 nm second emission-auxiliary layer 92 of lithium fluoride and a 150 nm aluminum layer 93 are sequentially deposited on the ITO transparent conductive glass by thermal evaporation.

10 nm of nano-dots possessing positive surface-charge is used to incorporate into aqueous PEDOT: PSS in the first emission-auxiliary layer. In the emissive layer, toluene is used to be the solvent, and the host material of 4,4'-bis(carbazol-9-yl) biphenyl (CBP) doped with 16 wt% blue emitter of bis(3,5-difluoro-2-(2-pyridyl)-phenyl-(2-carboxypyridyl) iridium (III) (FIrpic) is used to prepare the emissive solution.

The first emission-auxiliary layer doped with the nano-dots possessing positive surface-charge can effectively block holes and increase the electron/hole-injection balance and recombination efficiency, thereby markedly enhancing the efficiency of the OLED. The resultant power efficiency at 100 cd/m² was increased from 18 to 37 lm/W, an increase of 205. The blue OLED exhibits CIE color coordinates of (0.18, 0.35).

### Example 2

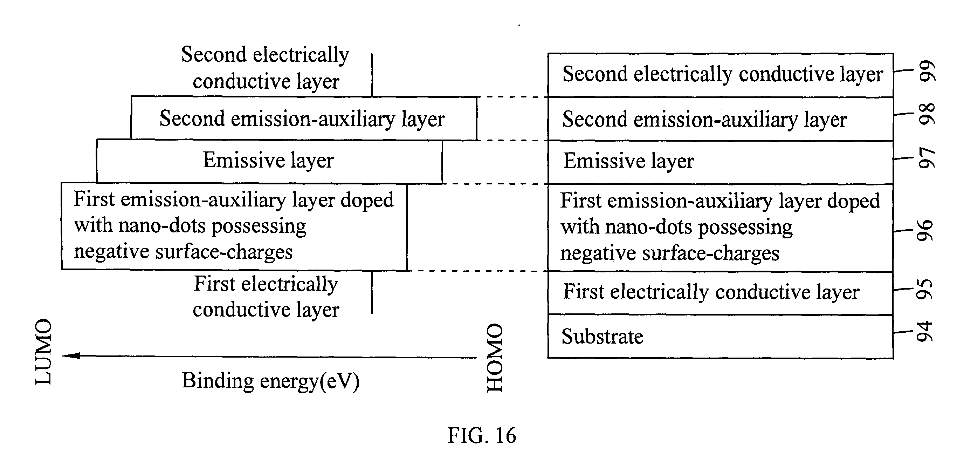

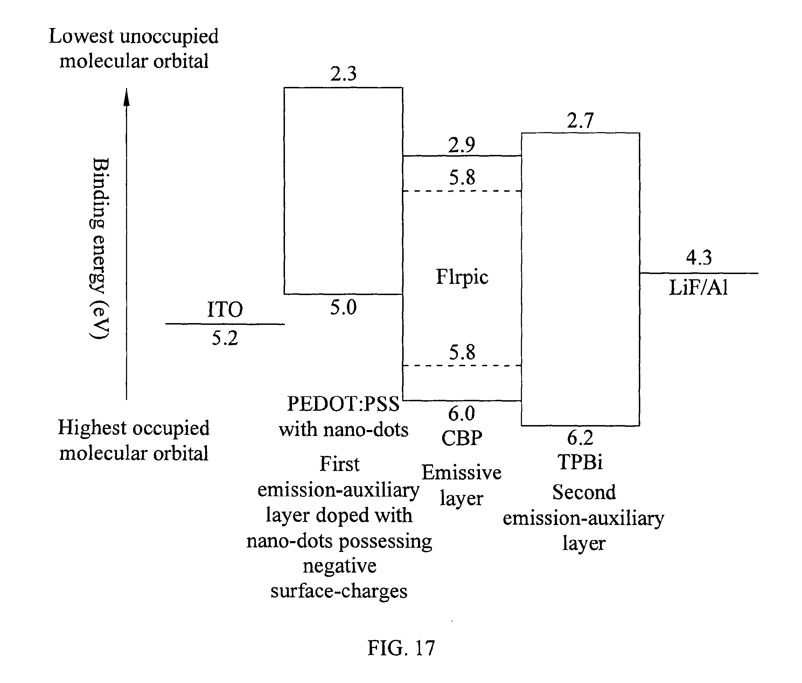

Example 2 is an OLED apparatus made according to the present invention. With reference to the apparatus structure shown in FIG. 16 and the schematic energy level diagram shown in FIG. 17, 10 nm of nano-dots possessing negative surface-charge is incorporated into aqueous PEDOT: PSS in an appropriate concentration to form an emission-auxiliary material 96.

The first emission-auxiliary layer suitably doped with the nano-dots possessing positive surface-charge can effectively trap holes and increase the electron/hole-injection balance and recombination efficiency, thereby markedly enhancing the efficiency of the OLED. The resultant power efficiency at 100 cd/m² was increased from 18 to 31 lm/W, an increase of 172. The blue OLED exhibits CIE color coordinates of (0.18, 0.34).

### Comparative Example

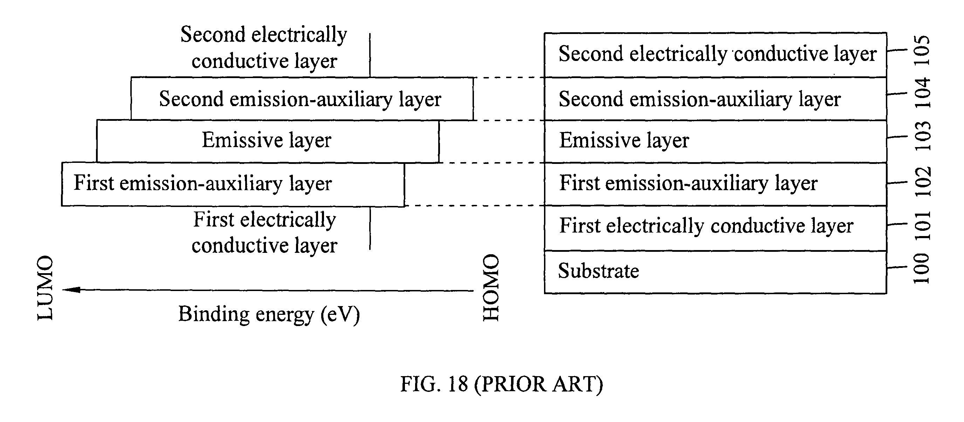

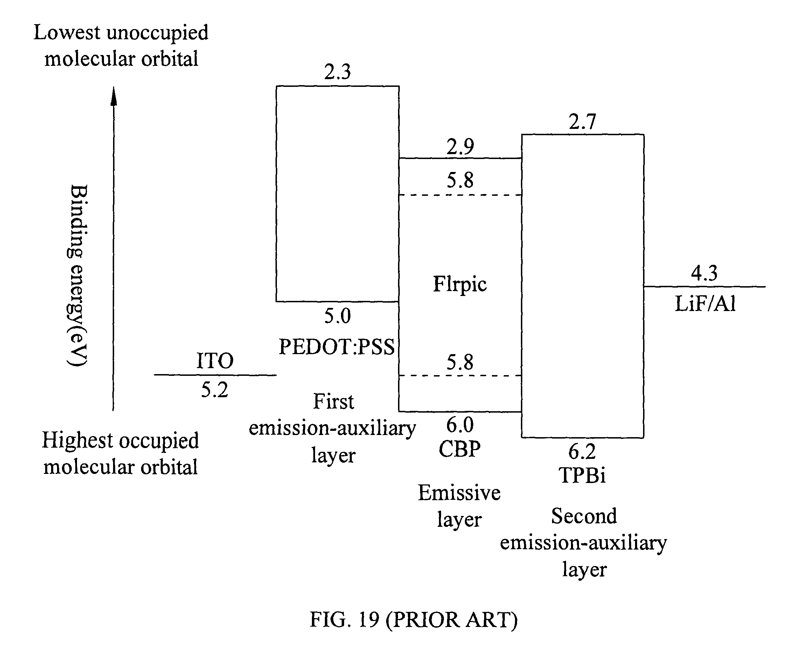

Comparative Example is an OLED apparatus made according to the prior art. The apparatus structure is as shown in FIG. 18. The material of the first emission-auxiliary layer 102 of the OLED structure is PEDOT: PSS. The schematic energy level diagram is given for reference in FIG. 19. In comparison with the OLED in Example 1 made according to the present invention, the OLED made in Comparative Example has unimproved electron/hole-injection balance and recombination efficiency such that the efficiency is significantly reduced, as shown as respective power efficiencies in Table 1.

**Table 1**

| | Power Efficiency (lm/W) | CIE Chromaticity Coordinates | Remark |
|---|---|---|---|
| Example 1 | 37 | (0.18,0.35) | present invention |
| Example 2 | 31 | (0.18,0.34) | present invention |
| Comparative Example | 18 | (0.18,0.34) | prior art |

## Claims

1. An organic light emitting diode with nano-dots comprising:
a substrate (76, 88, 94);
a first electrically conductive layer (77, 89, 95) deposited on the substrate (76, 88, 94);
a first emission-auxiliary layer (78, 90, 96) deposited on the first electrically conductive layer (77, 89, 95);
an emissive layer (79, 91, 97) on the first emission-auxiliary layer (78, 90, 96);
a second emission-auxiliary layer (80, 92, 98) deposited on the emissive layer (79, 91, 97); and
a second electrically conductive layer (81, 93, 99) deposited on the second emission-auxiliary layer (80, 92, 98);
wherein nano-dots with functional groups on the surface are doped into the emissive layer (79, 91, 97), the first emission-auxiliary layer (78, 90, 96) or the second emission-auxiliary layer (80, 92, 98).

2. The organic light emitting diode with nano-dots as described in claim 1, wherein the chemical formula of the nano-dots is MₓO_{y}R_{z} where M is a metal, transition metal, metalloid or metal alloy, O is an oxygen atom and R is an organic group.

3. The organic light emitting diode with nano-dots as described in claim 2, wherein the metal is selected from the group consisting of aluminum (Al), tin (Sn), magnesium (Mg) and calcium (Ca).

4. The organic light emitting diode with nano-dots as described in claim 2, wherein the transition metal is selected from the group consisting of titanium (Ti), manganese (Mn), zinc (Zn), gold (Au), silver (Ag), copper (Cu), nickel (Ni) and iron (Fe).

5. The organic light emitting diode with nano-dots as described in claim 2, wherein the metalloid is silicon (Si).

6. The organic light emitting diode with nano-dots as described in claim 2, wherein the organic group is selected from the group consisting of amino, alkyl, alkenyl and hydroxyl.

7. The organic light emitting diode with nano-dots as described in claim 1, wherein surface charges of the nano-dots measured by means of an electrophoresis light scattering method are from +1 to +200 mV.

8. The organic light emitting diode with nano-dots as described in claim 1, wherein surface charges of the nano-dots measured by means of an electrophoresis light scattering method are from -1 to -200 mV.

9. The organic light emitting diode with nano-dots as described in claim 1, wherein doping concentration of the nano-dots is from 0.1 to 15 wt%.

10. The organic light emitting diode with nano-dots as described in claim 1, wherein particle sizes of the nano-dots are in a range of 1 to 30 nm.

11. The organic light emitting diode with nano-dots as described in claim 1, wherein the substrate (76, 88, 94) is a transparent substrate.

12. The organic light emitting diode with nano-dots as described in claim 11, wherein the transparent substrate comprises a glass substrate or a plastic substrate.

13. The organic light emitting diode with nano-dots as described in claim 1, wherein the emissive layer (79, 91, 97) comprises a fluorescent emissive material or a phosphorescent emissive material.

14. The organic light emitting diode with nano-dots as described in claim 1, wherein a fluorescent emissive material and a phosphorescent emissive material are simultaneously used in the emissive layer (79, 91, 97).

15. The organic light emitting diode with nano-dots as described in claim 1, wherein the first emission-auxiliary layer (78, 90, 96) comprises a carrier injection layer, a carrier transporting layer, a carrier blocking layer or an exciton-confining layer.

16. The organic light emitting diode with nano-dots as described in claim 1, wherein the second emission-auxiliary layer (80, 92, 98) comprises a carrier injection layer, a carrier transporting layer, a carrier blocking layer or an exciton-confining layer.

17. A fabrication method of an organic light emitting diode with nano-dots comprising the following steps:
providing a substrate (76, 88, 94);
forming a first electrically conductive layer (77, 89, 95) on the substrate (76, 88, 94);
forming a first emission-auxiliary layer (78, 90, 96) on the first electrically conductive layer (77, 89, 95);
forming an emissive layer (79, 91, 97) on the first emission-auxiliary layer (78, 90, 96);
forming a second emission-auxiliary layer (80, 92, 98) on the emissive layer (79, 91, 97); and
forming a second electrically conductive layer (81, 93, 99) on the second emission-auxiliary layer (80, 92, 98);
wherein nano-dots with functional groups on the surface are doped into the emissive layer (79, 91, 97), the first emission-auxiliary layer (78, 90, 96) or the second emission-auxiliary layer (80, 92, 98).

18. The fabrication method of an organic light emitting diode with nano-dots as described in claim 17, wherein the chemical formula of the nano-dots is MₓO_{y}R_{z} where M is a metal, transition metal, metalloid or metal alloy, O is an oxygen atom and R is an organic group.

19. The fabrication method of an organic light emitting diode with nano-dots as described in claim 18, wherein the metal is selected from the group consisting of aluminum (Al), tin (Sn), magnesium (Mg) and calcium (Ca).

20. The fabrication method of an organic light emitting diode with nano-dots as described in claim 18, wherein the transition metal is selected from the group consisting of titanium (Ti), manganese (Mn), zinc (Zn), gold (Au), silver (Ag), copper (Cu), nickel (Ni) and iron (Fe).

21. The fabrication method of an organic light emitting diode with nano-dots as described in claim 18, wherein the metalloid is silicon (Si).

22. The fabrication method of an organic light emitting diode with nano-dots as described in claim 18, wherein the organic group is selected from the group consisting of amino, alkyl, alkenyl and hydroxyl.

23. The fabrication method of an organic light emitting diode with nano-dots as described in claim 17, wherein surface charges of the nano-dots measured by means of an electrophoresis light scattering method are from +1 to +200 mV.

24. The fabrication method of an organic light emitting diode with nano-dots as described in claim 17, wherein surface charges of the nano-dots measured by means of an electrophoresis light scattering method are from -1 to -200 mV.

25. The fabrication method of an organic light emitting diode with nano-dots as described in claim 17, wherein doping concentration of the nano-dots are from 0.1 to 15 wt%.

26. The fabrication method of an organic light emitting diode with nano-dots as described in claim 17, wherein particle sizes of the nano-dots are in a range of 1 to 30 nm.

27. The fabrication method of an organic light emitting diode with nano-dots as described in claim 17, wherein the substrate (76, 88, 94) is a transparent substrate.

28. The fabrication method of an organic light emitting diode with nano-dots as described in claim 27, wherein the transparent substrate comprises a glass substrate or a plastic substrate.

29. The fabrication method of an organic light emitting diode with nano-dots as described in claim 17, wherein the emissive layer (79, 91, 97) comprises a fluorescent emissive material or a phosphorescent emissive material.

30. The fabrication method of an organic light emitting diode with nano-dots as described in claim 17, wherein a fluorescent emissive material and a phosphorescent emissive material are simultaneously used in the emissive layer (79, 91, 97).

31. The fabrication method of an organic light emitting diode with nano-dots as described in claim 17, wherein the first emission-auxiliary layer (78, 90, 96) comprises a carrier injection layer, a carrier transporting layer, a carrier blocking layer or an exciton-confining layer.

32. The fabrication method of an organic light emitting diode with nano-dots as described in claim 17, wherein the second emission-auxiliary layer (80, 92, 98) comprises a carrier injection layer, a carrier transporting layer, a carrier blocking layer or an exciton-confining layer.
